(19) Europäisches Patentamt
European Patent Office
Office européen des brevets

(11) **EP 3 738 797 B1**

(12) **EUROPÄISCHE PATENTSCHRIFT**

(45) Veröffentlichungstag und Bekanntmachung des Hinweises auf die Patenterteilung:
**09.08.2023   Patentblatt 2023/32**

(51) Internationale Patentklassifikation (IPC):
**B60D 1/06** *(2006.01)*       **B60D 1/62** *(2006.01)*
**B60D 1/24** *(2006.01)*       **B60D 1/54** *(2006.01)*

(21) Anmeldenummer: **20182545.2**

(22) Anmeldetag: **25.02.2015**

(52) Gemeinsame Patentklassifikation (CPC):
**B60D 1/248; B60D 1/06; B60D 1/54; B60D 1/62; G01L 5/136**

(54) **ANHÄNGEKUPPLUNG MIT EINER AUSWERTEEINRICHTUNG, AUSWERTEEINRICHTUNG UND AUSWERTEVERFAHREN**

EVALUATION DEVICE; TRAILER COUPLING WITH AN EVALUATION DEVICE, AND EVALUATION METHOD

ATTELAGE DE REMORQUE DOTÉ D'UN DISPOSITIF D'ÉVALUATION, DISPOSITIF D'ÉVALUATION ET PROCÉDÉ D'ÉVALUATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.02.2014   DE 102014002677**

(43) Veröffentlichungstag der Anmeldung:
**18.11.2020   Patentblatt 2020/47**

(62) Dokumentnummer(n) der früheren Anmeldung(en) nach Art. 76 EPÜ:
**15706472.6 / 3 110 636**

(73) Patentinhaber: **WESTFALIA - Automotive GmbH 33378 Rheda-Wiedenbrück (DE)**

(72) Erfinder: **Sielhorst, Bernhard 33378 Rheda-Wiedenbrück (DE)**

(74) Vertreter: **Patentanwälte Bregenzer und Reule Partnerschaftsgesellschaft mbB Neckarstraße 47 73728 Esslingen (DE)**

(56) Entgegenhaltungen:
**DE-A1-102011 117 519       US-A1- 2013 253 814 US-B1- 6 705 684**

**Beschreibung**

Die Erfindung betrifft eine Auswerteeinrichtung gemäß dem Oberbegriff des Anspruchs 1 für eine Anhängekupplung für ein Zugfahrzeug. Die Erfindung betrifft ferner eine mit einer derartigen Auswerteeinrichtung ausgestattete Anhängekupplung sowie ein Auswerteverfahren für eine derartige Anhängekupplung.

Eine derartige Anhängekupplung sowie Auswerteeinrichtung und Auswerteverfahren sind beispielsweise in DE 10 2011 117 519 A1 oder DE 10 2012 021 352 A1 erläutert. Anhand der Beschleunigung des Zugfahrzeugs und der in Fahrzeuglängsrichtung, der sogenannten X-Richtung, auftretenden Kraft an dem Kupplungsarm, also dem Kuppelträger, wird dabei die Anhängermasse ermittelt. In der Praxis ergeben sich jedoch teilweise Messfehler oder Abweichungen, die es zu beseitigen gilt.

Es ist daher die Aufgabe der vorliegenden Erfindung, eine Auswerteeinrichtung, eine mit einer Auswerteeinrichtung ausgestattete Anhängekupplung und ein Auswerteverfahren bereitzustellen, die eine exaktere Ermittlung der Anhängermasse ermöglichen.

Zur Lösung der Aufgabe ist bei einer Auswerteeinrichtung gemäß der technischen Lehre des Anspruchs 1 vorgesehen.

Zur Lösung der Aufgabe ist auch ein Auswerteverfahren gemäß der technischen Lehre des Anspruchs 13 vorgesehen.

Die erfindungsgemäße Auswerteeinrichtung für eine Anhängekupplung, die zur Anordnung an einem Zugfahrzeug vorgesehen ist oder am Zugfahrzeug angeordnet ist, wobei die Anhängekupplung einen Kuppelträger, insbesondere einen Kupplungsarm, umfasst, an dessen freiem Ende ein Kuppelkörper, zum Beispiel eine Kupplungskugel, angeordnet ist, so dass ein Anhänger angehängt werden kann, wobei der Kuppelträger an einer am Zugfahrzeug befestigten oder befestigbaren Halterung fest oder beweglich angeordnet ist, hat eine Eingangsschnittstelle für ein Kraftsignal, das von einer Sensoranordnung mit mindestens einem Sensor geliefert wird, die zur Erfassung einer bei einem Zugbetrieb des Anhängers auf das Kuppelelement wirkenden Zuglast und/oder Schubkraft vorgesehen ist, wobei das Kraftsignal die Zuglast oder Schubkraft repräsentiert. Es ist auch möglich, dass die Auswerteeinrichtung den mindestens einen Sensor oder die Sensoranordnung direkt integral umfasst. Die Auswerteeinrichtung hat Auswertemittel zur Ermittlung eines Anhänger-Massewerts des Anhängers anhand des Kraftsignals. Erfindungsgemäß ist vorgesehen, dass die Auswertemittel zur Ermittlung des Anhänger-Massewert anhand einer Auswertung mindestens eines Federparameters ausgestaltet sind, wobei der Federparameter eine federnde Eigenschaft der Anhängekupplung, zum Beispiel des Kuppelträgers, der Halterung oder dergleichen, repräsentiert.

Die Auswerteeinrichtung kann z.B. ein Bestandteil eines Steuergeräts zur Ansteuerung und/oder Überwachung einer Anhängekupplung sein oder dadurch gebildet werden. Vorzugsweise hat die Auswerteeinrichtung eine Busschnittstelle oder eine sonstige Schnittstelle zur Kommunikation mit einem Bordnetz des Zugfahrzeugs.

Es ist ein Grundgedanke, dass die Anhängekupplung nicht als eine relativ starre Einheit betrachtet wird, sondern dass die federnde und zweckmäßigerweise auch dämpfende Eigenschaft der Anhängekupplung zur Ermittlung der Anhängermasse ausgewertet werden. Das ist ein völlig neuer Ansatz. Insbesondere ist es zweckmäßig, die federnde oder dämpfende Eigenschaft des Kuppelträgers oder Kupplungsarms in dem erfindungsgemäßen Auswerteverfahren oder bei der Auswerteeinrichtung zu berücksichtigen. Es ist aber auch möglich, das an anderer Stelle der Anhängekupplung, zum Beispiel an einer den Kupplungsarm haltenden Halterung, zum Beispiel einem Schwenklager, einer Steckaufnahme oder dergleichen, oder auch an einem Querträger oder einem sonstigen Trageelement, das am Heck des Kraftfahrzeugs befestigt ist, die durch das Ziehen des Anhängers oder das Auflaufen des Anhängers auf das Zugfahrzeug verursachten, in Fahrzeuglängsrichtung wirkenden Zugkräfte und Schubkräfte sensorisch zu erfassen und dabei die federnde Eigenschaft der jeweiligen Komponente, nämlich auch beispielsweise der vorgenannten Halterung oder des Trageelements (zum Beispiel des Querträgers), bei der Ermittlung des Anhänger-Massewerts zu berücksichtigen.

Ein Grundgedanke ist, dass der Anhänger durch die Beschleunigung des Zugfahrzeugs sozusagen zu Schwingungen relativ zum Zugfahrzeug angeregt wird, also sozusagen "federnd" und jedenfalls nicht völlig starr an das Zugfahrzeug anhand der Anhängekupplung angehängt ist.

Das Kraftsignal kann beispielsweise von der Auswerteeinrichtung anhand eines Dehnungssignals oder eines sonstigen Signals eines Dehnungssensors ermittelt werden. Es versteht sich, dass die Auswerteeinrichtung auch eine Eingangsschnittstelle direkt für das Kraftsignal haben kann, d.h. dass die Sensoranordnung beispielsweise eine Dehnung oder Stauchung oder sonstige Verformung der von ihr erfassten Komponente der Anhängekupplung, zum Beispiel des Kupplungsarms oder dessen Halterung, ermittelt und daraus das Kraftsignal für die Auswerteeinrichtung generiert.

Der mindestens eine Federparameter umfasst zweckmäßigerweise eine Federkonstante des Kuppelträgers, insbesondere des Kupplungsarms. Der Federparameter kann aber auch eine Federkomponente eines anderen Bauteils der Anhängekupplung berücksichtigen, beispielsweise der Halterung für den Kupplungsarm oder Kupplungträger, des Querträgers oder eines sonstigen Trageelements. Der Federparameter wird beispielsweise anhand einer Finite-Elemente-Berechnung (FEM) ermittelt, kann aber auch beispielsweise anhand von Versuchen (experimentell) oder einer physikalischen Überprüfung ermittelt werden.

Der mindestens eine Federparameter bildet erfindungsgemäß einen Bestandteil einer von der Auswerteeinrichtung ausgewerteten Gleichung, die den Anhänger als einen Bestandteil eines Einmassen-Schwingungssystems abbildet. Der Anhänger schwingt also relativ zum Zugfahrzeug. Die Gleichung ist beispielsweise eine Differenzialgleichung. Die Ermittlung einer Masse bei einem Einmassen-Schwingungssystem kann auf vielfältige Weise geschehen, d.h. dass es mehrere Ansätze gibt, die Masse des Anhängers bzw. den Anhänger-Massewert zu ermitteln. Das wird nachfolgend noch deutlich.

Eine zweckmäßige Variante der Erfindung sieht vor, dass der mindestens eine Federparameter einen Bestandteil einer von der Auswerteeinrichtung ausgewerteten Gleichung bildet, beispielsweise eine Differenzialgleichung, wobei diese Gleichung als weitere Komponente das Produkt des Anhänger-Massewerts und eines die Beschleunigung des Anhängers repräsentierenden Anhänger-Beschleunigungswerts oder als relativ zu dem Anhänger-Beschleunigungswert einen Zugfahrzeug-Beschleunigungswert umfasst, der die Beschleunigung des Zugfahrzeugs repräsentiert. Der Anhänger-Beschleunigungswert kann gegebenenfalls durch einen Beschleunigungssensor an Bord des Anhängers, zum Beispiel dessen Deichsel, direkt gemessen werden. Beim in der Zeichnung dargestellten Ausführungsbeispiel ist das allerdings nicht der Fall. Die Auswerteeinrichtung bzw. das Auswerteverfahren ermitteln sozusagen indirekt über die Beschleunigung des Zugfahrzeugs die Beschleunigung des Anhängers. Das kann anhand einer Differenzialgleichung geschehen.

Die Auswertemittel sind vorzugsweise auch zur Ermittlung des Anhänger-Massewerts anhand einer Auswertung mindestens eines Dämpferparameters ausgestaltet. Der Dämpferparameter repräsentiert eine Dämpfungseigenschaft der Anhängekupplung im Sinne einer Schwingungsdämpfung. Mithin federt also die Anhängekupplung sozusagen, hat aber auch eine dämpfende Eigenschaft, d.h. die Schwingung wird von der Anhängekupplung selbst wiederum reduziert oder gedämpft. Der Dämpfungsparameter oder Dämpfungswert kann beispielsweise eine aufgrund von Materialeigenschaften beispielsweise des Kupplungsarms, des Querträgers oder des Halters für den Kupplungsarm bedingte Dämpfungseigenschaft repräsentieren. Der Dämpfungsparameter kann aber auch eine Dämpfung repräsentieren, die durch einen Auflaufdämpfer, der zwischen Zugfahrzeug und Anhänger wirksam ist, bedingt ist. Ferner kann der Dämpfungsparameter auch Reibungen repräsentieren, die ebenfalls eine Dämpfungswirkung haben. Schließlich ist es auch möglich, dass der Dämpferparameter Reibungen in einem Fahrwerk, beispielsweise des Anhängers berücksichtigt oder repräsentiert.

Die Gleichung oder Differenzialgleichung lautet beispielsweise grundsätzlich wie folgt:

$$0 = mh * ah + d * v + c * s \qquad (1)$$

wobei

mh die Masse des Anhängers
ah die Beschleunigung des Anhängers ist, also der Anhänger-Beschleunigungswert,
c sozusagen die Federkonstante der Anhängekupplung, also der mindestens eine Federparameter,
v die Geschwindigkeit des Anhängers,
s der Weg des Anhängers und
d der vorgenannte mindestens eine Dämpferparameter, also beispielsweise die Dämpfungseigenschaft der Anhängekupplung, sind.

Bei der Federkonstante und dem Dämpferparameter handelt es sich beispielsweise um Parameter des Kupplungsarms oder Kuppelträgers.

Man kann die Formel (1) und unter Berücksichtigung der Zugfahrzeugbeschleunigung wie folgt formulieren

$$0 = m_h * \Delta\ddot{s} + d \quad * \Delta\dot{s} + c \quad * \Delta s \qquad (2)$$

Dabei ist dann $\Delta s$ die Differenz (Wegedifferenz) zwischen Fahrzeug-Weg und Anhänger-Weg, die in der obigen Gleichung unmittelbar mit dem mindestens einen Federparameter multipliziert wird.

Ferner wird die erste Ableitung der Wegedifferenz $\Delta s$ nach der Zeit, also der Geschwindigkeitswert, mit dem mindestens einen Dämpferparameter multipliziert.

Die zweite Ableitung der Wegedifferenz $\Delta s$ nach der Zeit, nämlich der Beschleunigungswert, wird mit der Masse des Anhängers mh multipliziert.

Die Beschleunigung wird also als zweite Ableitung der Wegedifferenz $\Delta s$, die Geschwindigkeit als erste Ableitung nach der Zeit der Wegedifferenz $\Delta s$ betrachtet.

Die Anregung des Systems erfolgt durch das Zugfahrzeug, das heißt das Zugfahrzeug übt die folgende Anregung über die Anhängekupplung auf den Anhänger aus:

$$Fx_A = m_{fzg} * \Delta\ddot{s}_{fzg} \qquad\qquad (3)$$

Dabei ist mfzg die Masse des Zugfahrzeugs, die mit der Beschleunigung des Zugfahrzeugs multipliziert wird, die sozusagen mit der zweiten Ableitung nach der Zeit des zurückgelegten Wegs Δsfzg des Zugfahrzeugs multipliziert wird, um die Anregungskraft FxA zu ermitteln.

Die Anregungskraft FxA entspricht der Kraft, die durch die Sensoranordnung ermittelt wird, also in dem Kraftsignal enthalten ist (Zugkraft oder Schubkraft oder beides).

Die Auswerteeinrichtung ist zweckmäßigerweise zu einer Ermittlung des Anhänger-Massewerts anhand eines Vergleichs zwischen einem zeitlichen Verlauf des anhand der Sensoranordnung gemessenen Kraftsignals oder ermittelten Kraftsignals und eines anhand eines mathematischen Modells ermittelten zeitlichen Kraftverlaufs ausgestaltet. Das Modell bildet den Anhänger ab und umfasst beispielsweise einen angenommenen, die Masse des Anhängers repräsentierenden Anhänger-Massewert und einen die Beschleunigung des Anhängers repräsentierenden Anhänger-Beschleunigungswert, insbesondere einen gemessenen oder errechneten Anhänger-Beschleunigungswert. Das Modell kann aber auch alternativ oder in Ergänzung zu diesem Anhänger-Beschleunigungswert den schon erwähnten, die Beschleunigung des Zugfahrzeugs repräsentierenden Zugfahrzeug-Beschleunigungswert umfassen. Wie gesagt, ist es möglich, sozusagen rückwärts von der Beschleunigung des Zugfahrzeugs auf die Beschleunigung des Anhängers zu schließen, was die erfindungsgemäße Auswerteeinrichtung bzw. das Auswerteverfahren auch leisten können.

Die Gleichung für das Modell, beispielsweise den Beobachter, lautet beispielsweise wie folgt:

$$fx_{mod} = c_{mod} * \left(s_{fzg} - s_{hmod}\right) + d_{mod} * \left(\dot{s}_{fzg-} \dot{s}_{hmod}\right) \qquad (4)$$

Dabei ist

- fxmod die anhand des Modells ermittelte in X-Richtung wirkende Kraft
- cmod ein Federparameter, beispielsweise eine Federkonstante, die dem Modell zu Grunde gelegt wird
- sfzg der vom Zugfahrzeug zurückgelegte Weg, von dem
- shmod, nämlich der vom Anhänger zurückgelegte Weg (im Modell angenommen) abgezogen wird, was zugleich der durch die in X Richtung wirkende Kraft Fx bewirkte Längenänderung der Anhängekupplung entspricht,
- dmod der im Modell angenommene Dämpferparameter, der mit der Differenz der jeweils ersten Ableitung nach der Zeit von sfzg und shmod multipliziert wird.

Die zweite Ableitung nach der Zeit des vom Anhänger zurückgelegten Wegs shmod, also der Anhänger-Beschleunigungswert ahmod im Modell, ist zugleich der Quotient aus der anhand des Modells ermittelten, in X Richtung wirkenden Kraft fxmod und einer in dem Modell angenommenen Masse des Anhängers mhmod:

$$\ddot{s}_{hmod} = \frac{fx_{mod}}{m_{hmod}} \qquad\qquad (5)$$

Man erkennt, dass die Werte für Weg (z.B. shmod, sfzg, sh), Geschwindigkeit und Beschleunigung durch entsprechende Integration nach der Zeit oder Ableitung nach der Zeit ineinander überführbar sind, um auf diesem Wege die Differenzialgleichung (2) aufzulösen. Das kann beispielsweise auf numerischem Weg geschehen. Eine Laplace-Transformation zur Lösung der Differenzialgleichung wäre zum Beispiel auch ein Ansatz.

Die Auswerteeinrichtung variiert beispielsweise einen oder mehrere Parameter in dem mathematischen Modell, zum Beispiel der Gleichung (4), um den ermittelten Kraftverlaufs an den Verlauf des gemessenen Kraftsignals anzupassen. Sozusagen iterativ wird dadurch der Anhänger-Massewert ermittelt. Bei dem vorgenannten Vergleich zwischen dem Kraftsignal gemäß dem mathematischen Modell und dem gemessenen Kraftsignal wird beispielsweise ein Differenzwert gebildet und in Abhängigkeit von dem Differenzwert werden dann die Parameter des Modells verändert. Einer dieser Parameter ist beispielsweise der Federparameter. Ein anderer Parameter kann auch der vorgenannte Dämpferparameter sein. Es versteht sich, dass in dem Modell mehrere Dämpferparameter und mehrere Federparameter enthalten sein können, beispielsweise Federparameter eines Querträgers und des Kupplungsarms oder auch Dämpferparameter von diesen beiden Komponenten. Es ist auch möglich, dass die Auswerteeinrichtung oder das Auswerteverfahren vorsehen, den sozusagen indirekt über die Beschleunigung des Zugfahrzeugs ermittelten Anhänger-Beschleunigungswert zu variieren.

An dieser Stelle sei bemerkt, dass der mindestens eine Dämpferparameter, d.h. der Einfluss der Dämpfung auf die jeweiligen obigen Formeln (1) - (3) auch vernachlässigt werden kann, d.h. dass man diesen Termbestandteil, z. B. in der Gleichung (1) oder (4), auch weglassen kann, ohne dass die Qualität des erfindungsgemäß ermittelten Anhänger-Massewert dadurch wesentlich schlechter werden würde, also z.B.

$$fx_{mod} = c_{mod} * \left( s_{fzg} - s_{hmod} \right)$$

(6)

Die Auswerteeinrichtung umfasst das mathematische Modell beispielsweise in der Art eines regelungstechnischen Beobachters. Das mathematische Modell kann bei dieser Ausgestaltung oder einer alternativen Ausgestaltung auch eine Differenzialgleichung umfassen.

Weiterhin ist es zweckmäßig, wenn die Auswerteeinrichtung oder das Auswerteverfahren eine numerische, iterative Auswertung mindestens einer Differenzialgleichung umfasst, wobei diese Differenzialgleichung zweckmäßigerweise den vorgenannten mindestens einen Federparameter oder Dämpferparameter umfasst.

Eine vorteilhafte Ausführungsform der Erfindung sieht vor, dass die Auswerteeinrichtung zur Ermittlung eines die Beschleunigung des Anhängers repräsentierenden Anhänger-Beschleunigungswerts anhand einer Differenzialgleichung ausgestaltet ist, insbesondere der Gleichungen (4) und/oder (5).

An dieser Stelle sei bemerkt, dass zwar prinzipiell denkbar und möglich ist, dass ein Beschleunigungssensor an Bord des Anhängers sozusagen direkt die Beschleunigung des Anhängers meldet und dies dann von der Auswerteeinrichtung berücksichtigt wird. In der Regel hat man es jedoch mit einem Anhänger zu tun, der keinerlei Sensorik aufweist. Hier setzt die Erfindung ein und erlaubt es, mit einem Beschleunigungswert, der vom Zugfahrzeug her gebildet ist, sozusagen indirekt die Beschleunigung des Anhängers zu berechnen.

Es ist möglich, dass die Auswerteeinrichtung eine Eingangsschnittstelle für einen Beschleunigungswert des Zugfahrzeugs hat, beispielsweise von einem Bordnetz des Zugfahrzeugs. Somit kann also das Zugfahrzeug beispielsweise seine jeweilige Beschleunigung dem Auswerteverfahren bzw. der erfindungsgemäßen Auswerteeinrichtung bereitstellen. Das kann auch indirekt geschehen, nämlich beispielsweise als Geschwindigkeitssignal, das dann von der Auswerteeinrichtung entsprechend differenziert wird.

Es ist allerdings vorteilhaft, wenn an Bord der Auswerteeinrichtung, jedenfalls an Bord der Anhängekupplung, mindestens ein Beschleunigungssensor vorgesehen ist, der sozusagen lokal und unabhängig vom Bordnetz des Zugfahrzeugs den Zugfahrzeug-Beschleunigungswert ermittelt.

Die Sensoranordnung umfasst zweckmäßigerweise mindestens einen Dehnungssensor, der an einer Komponente der Anhängekupplung angeordnet ist und zur Erfassung einer durch die Zugkraft und/oder Schubkraft verursachten Verformung der Komponente der Anhängekupplung ausgestaltet ist. Bei der Komponente handelt es sich beispielsweise um den Kuppelträger, insbesondere den Kupplungsarm. Die Komponente kann aber auch die Halterung umfassen oder einen Träger der Anhängekupplung, der zur Befestigung am Zugfahrzeug vorgesehen ist oder am Zugfahrzeug angeordnet ist, beispielsweise einen Querträger.

Figur 1      ein Gespann bestehend aus einem Zugfahrzeug und einem anhand einer Anhängekupplung mit dem Zugfahrzeug verbundenen Anhänger bei einem im Wesentlichen unbeschleunigten Fahrvorgang,

Figur 2      das Gespann gemäß Figur 1 bei einer Beschleunigung des Zugfahrzeugs,

Figur 3      das Gespann gemäß Figuren 1, 2 bei einem Bremsvorgang des Zugfahrzeugs,

Figur 4      das Gespann gemäß der vorstehenden Figuren mit einer eine symbolisch dargestellte Feder enthaltenden Anhängekupplung,

Figur 5      eine schematische Darstellung einer Auswerteeinrichtung der Anhängekupplung,

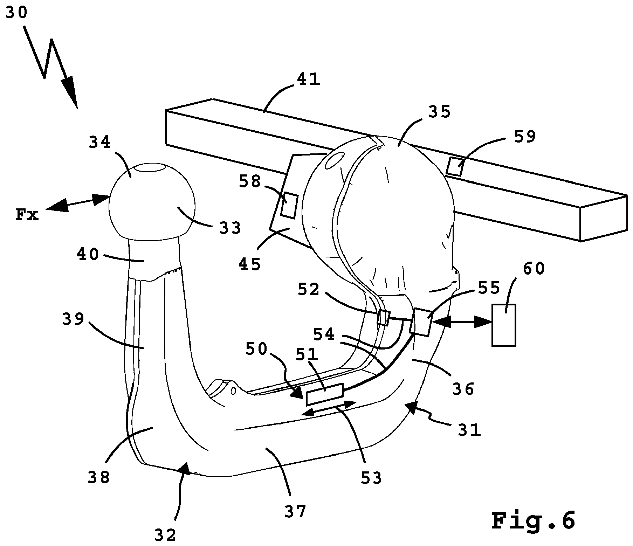

Figur 6      eine Detailansicht der Anhängekupplung gemäß der vorstehenden Figuren mit schematisch eingezeichneten Kraftsensoren,

Figur 7      Verläufe von gemessenen und anhand eines Modells ermittelten Beschleunigungswerten,

Figur 8      Verläufe einer gemessenen und einer anhand eines Modells ermittelten Zugkraft an der Anhängekupplung,

Figur 9      einen Verlauf einer Kraftdifferenz zwischen der anhand des Modells ermittelten Zugkraft und der gemessenen Zugkraft entsprechend Figur 8, und

Figur 10     Verläufe einer gemessenen und einer anhand eines Modells ermittelten Zugkraft an der Anhängekupplung, ähnlich wie in Figur 8, jedoch bei einem stark fehlerhaft angenommenen Massewert des Anhängers.

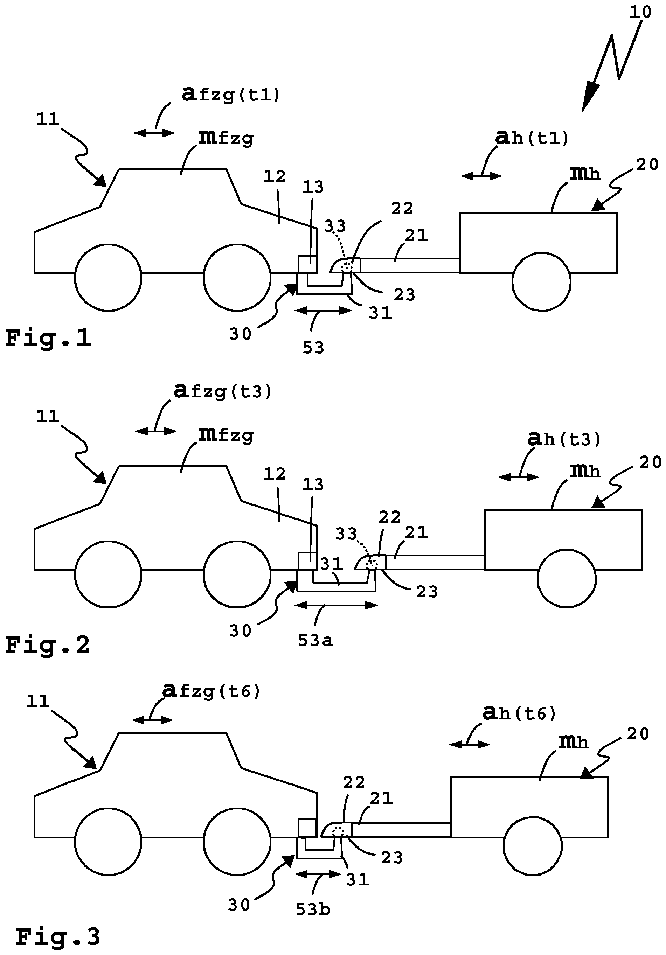

Ein Gespann 10 gemäß Figuren 1-4 umfasst ein Zugfahrzeug 11, beispielsweise einen Personenkraftwagen, an dessen Heck 12 eine Anhängekupplung 30 angeordnet ist.

Die Anhängekupplung 30 umfasst als einen Kuppelträger 32 beispielsweise einen Kupplungsarm 31, der an einem am Heck 12 des Zugfahrzeugs 11 befestigten Querträger 41 lösbar, zum Beispiel anhand einer Steckverbindung, fest oder beweglich, zum Beispiel zwischen einer Gebrauchsstellung und einer Ruhestellung verschieblich und/oder schwenkbar, angeordnet ist. Jedenfalls steht der Kupplungsarm 31 in der Gebrauchsstellung nach hinten vor das Heck 12, beispielsweise an einem Stoßfänger 13 des Zugfahrzeugs 11 vorbei, vor, so dass ein Anhänger 20 an das Zugfahrzeug 11 ankuppelbar ist.

Der Anhänger 20 hat beispielsweise eine Deichsel 21, an deren vorderem, freien Endbereich eine Kupplung, insbesondere eine Zugkugelkupplung 22, angeordnet ist. Die Zugkugelkupplung 22, jedenfalls die anhängerseitige Kupplung, ist lösbar mit der Zugfahrzeug-Anhängekupplung 30 verbindbar. Das ist an sich bekannt. Beispielsweise greift ein Kuppelkörper 33 , der am freien Ende des Kuppelträgers 32 bzw. des Kupplungsarms 31 angeordnet ist, in eine Aufnahme 23 der Zugkugelkupplung 22 ein und ist dort drehgelenkig gelagert. Der Kuppelkörper 33 umfasst beispielsweise eine Kupplungskugel 34.

Der Kuppelträger 32 bzw. Kupplungsarm 31 ist an einem Befestigungsbereich 35 beispielsweise drehbar an einem Lager (nicht dargestellt) einer Halterung 45 gelagert. Die Halterung 45 ist z.B. am Querträger 41 fest montiert oder wird durch diesen gebildet.

Von dem Befestigungsbereich 35, den man auch als Lagerbereich bezeichnen könnte, erstreckt sich ein Abschnitt 36 weg, der eine Krümmung aufweist und in einen Abschnitt 37 übergeht. Der Abschnitt 37 verläuft beispielsweise am Stoßfänger 13 des Zugfahrzeugs 11 vorbei und ist im Wesentlichen geradlinig, wobei auch eine Krümmung oder Weiteres möglich wäre (bei einer alternativen Ausgestaltung des Kupplungsarms) . Jedenfalls geht der Abschnitt 37 mit einer Krümmung 38 in einen hoch stehenden Abschnitt 39 über, an dessen freiem Endbereich ein normgerechter zylindrischer Abschnitt 40 vorgesehen ist, der seinerseits wiederum den Kuppelkörper 33 trägt. Diese geometrischen Verhältnisse sind zwar vorteilhaft. Ein anders ausgestalteter Kuppelträger oder Kupplungsarm und/oder ein anderer Kuppelkörper, z. B. ein kubischer Kuppelkörper, sind aber auch möglich.

An dem Kuppelträger 32, also dem Kupplungsarm 31, ist eine Sensoranordnung 50 mit beispielsweise einem Sensor 51 und einem Sensor 52 vorgesehen. Der Sensor 51 ist beispielsweise am Abschnitt 37 angeordnet, so dass er beispielsweise eine Längenänderung 53 des Abschnitts 37, mithin also des Kuppelträgers 32 oder Kupplungsarms 31, erfassen kann. Die Längenänderung 53 wird beispielsweise durch eine Zuglast oder Schublast, also z.B. den konkret angehängten Anhänger 20 verursacht, wenn das Gespann 10 beschleunigt oder abbremst. Der Sensor 51 ist oder umfasst beispielsweise einen Dehnungssensor oder Dehnungsmessstreifen.

Der Sensor 52 ist an dem gekrümmten Abschnitt 36 des Kuppelträgers 32 oder Kupplungsarms 31 vorgesehen und erfasst im Wesentlichen eine Auswirkung einer Stützlast, die auf den Kupplungsarm 31 einwirkt. Das soll hier aber nicht im Vordergrund stehen. Möglich ist es auch, dass der Sensor 52 eine Längenänderung des Abschnitts 36 des Kupplungsarms 31 erfasst, die durch eine Zuglast oder Schublast verursacht ist. Auch der Sensor 52 ist vorzugsweise ein Dehnungssensor oder umfasst einen Dehnungsmessstreifen.

Die Sensoren 51, 52 sind über Leitungen 54 oder drahtlos an eine Übertragungseinrichtung 55 angeschlossen oder angebunden, die von den Sensoren 51, 52 erzeugten Meldesignale 56 werden an eine Auswerteeinrichtung 60 übertragen, beispielsweise leitungsgebunden oder drahtlos, beispielsweise über Funk oder auf optischem Wege.

Eine Auswerteeinrichtung 60 ermittelt nunmehr eine Masse mh des Anhängers 20 anhand der Meldesignale 56.

Die Auswerteeinrichtung 60 umfasst beispielsweise einen Prozessor 61 zur Ausführung von Programmbefehlen oder Programmcode eines Programms, beispielsweise eines Auswertemoduls 70, sowie einen Speicher 62 zur Speicherung von Werten, beispielsweise Parametern, Zwischenwerten und dergleichen, sowie des vorgenannten Programms oder Auswertemoduls 70. Das Auswertemodul 70 kann beispielsweise vom Prozessor 61 aus dem Speicher 62 geladen werden, was durch einen Pfeil 71 angedeutet ist. Der Programmcode des Auswertemoduls 70 ist beispielsweise in der Programmiersprache C programmiert und anschließend kompiliert, wobei selbstverständlich auch andere Programmiersprachen ohne weiteres zur Realisierung eines erfindungsgemäßen Auswertemoduls mit Programmcode möglich sind.

Die Auswerteeinrichtung 60 hat beispielsweise eine Eingangsschnittstelle 63, über die sie das Meldesignal 56 erfassen kann.

Eine Signalauswerteeinheit 64, die beispielsweise durch Programmcode des Auswertemoduls 70 und/oder durch eine entsprechende Hardwarekomponente, beispielsweise durch mindestens einen Logikbaustein, gebildet sein kann, wertet das Meldesignal 56 aus, das eine auf den Kupplungsarm 31 einwirkende Zugkraft oder Schubkraft oder beides repräsentiert, nämlich als ein Messsignal, das beispielsweise eine Längenänderung 53 des Sensors 51 oder des Sensors 52 oder beiden darstellt. Das Meldesignale 56 wird von der Signalauswerteeinheit 64 in ein Kraftsignal fx umgewandelt, dass die in X-Richtung Richtung auf die Anhängekupplung 30 einwirkende Kraft, somit also eine Zugkraft und/oder Schubkraft Fx, repräsentiert.

An dieser Stelle sei bemerkt, dass selbstverständlich auch vorgesehen sein kann, dass die Sensoren 51 oder 52 integrale Bestandteile der Signalauswerteeinheit 64 bilden können oder dass beispielsweise die Sensoranordnung 50 bereits das Kraftsignal fx generiert.

In den Figuren 1-3 sind verschiedene Beschleunigungszustände des Gespanns 10 dargestellt.

Zu einem Zeitpunkt t1 gemäß Figur 1 hat das Zugfahrzeug 11 beispielsweise einen Zugfahrzeug-Beschleunigungswert afzg(t1), während der Anhänger 20 einen möglicherweise genau gleichen oder sehr ähnlichen Anhänger-Beschleunigungswert ah(t1) aufweist. Das Gespann ist also quasi in einer gleichmäßigen Beschleunigung. Die Längenänderung 53 der Anhängekupplung 30 ist also beispielsweise etwa Null.

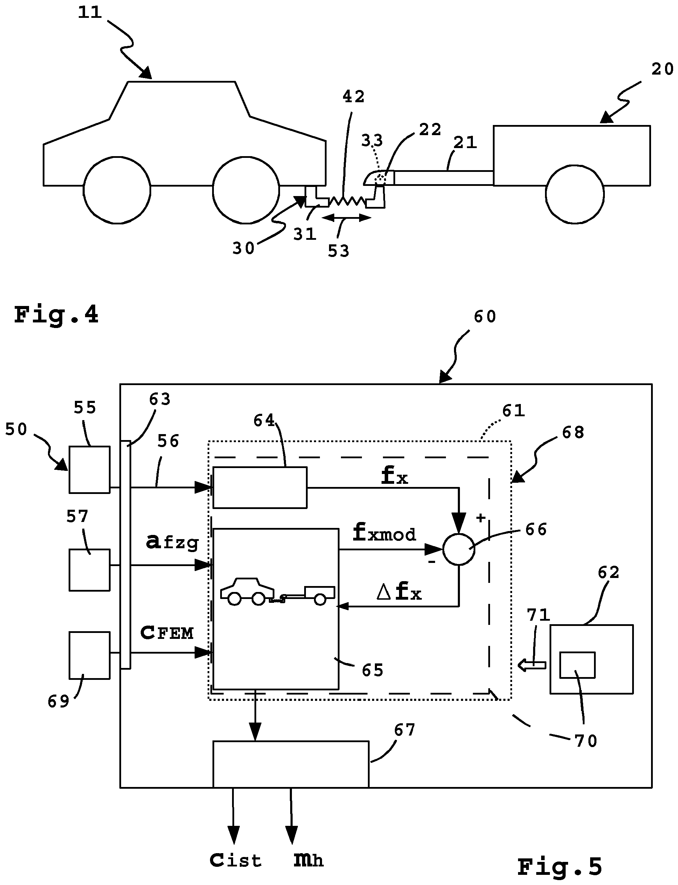

Zu einem Zeitpunkt t3 beschleunigt das Gespann 10, wobei die Zugfahrzeug-Beschleunigung afzg(t3) größer ist als die Beschleunigung des Anhängers, also größer als der Anhänger-Beschleunigungswert ah(t3). Der Anhänger 20 kommt also sozusagen nicht hinterher bzw. ist träger, wodurch eine Längenänderung 53a der Anhängekupplung 30 bewirkt wird. Die Anhängekupplung 30 dehnt sich wie eine Feder 42 aus, was in Figur 4 angedeutet ist. Dort ist der Kupplungsarm 31 oder Kuppelkörper 32 mit einer integrierten Feder 42 dargestellt (was symbolisch zu verstehen ist).

Bei einem Bremsbetrieb oder Schubbetrieb kehren sich die Verhältnisse um, das heißt dass die Anhängekupplung 30 eine Schubkraft erfährt, sozusagen eine negative Beschleunigung, was beispielsweise zu einem Zeitpunkt t6 stattfindet. Die Zugfahrzeug-Beschleunigung afzg (t6) ist also negativ, der Anhänger 20 schiebt sozusagen, so dass die Anhängekupplung 31 eine Längenänderung 53b erfährt.

Die Auswerteeinrichtung 60 ist nunmehr in der Lage, die federnde Eigenschaft der Anhängekupplung 30 zu berücksichtigen, sozusagen die Feder 42 bei der Ermittlung der realen Masse des Anhängers 20 zu berücksichtigen.

Die Auswerteeinrichtung 60 verfügt über einen Modellgenerator 65, der anhand der Beschleunigung afzg des Zugfahrzeugs 10 sowie einem Federparameter c und den obigen Formeln (4) und (5) einen Modell-Kraftverlauf fxmod generiert, wobei optional auch die Dämpfung d betrachtet wird, was nicht sein muss. Der Modellgenerator 65 kann beispielsweise durch Programmcode des Auswertemoduls 70 gebildet oder repräsentiert sein.

Der Modellgenerator 65 variiert verschiedene Werte, insbesondere die Federkonstante c und den Dämpferparameter d (wenn er berücksichtigt wird) sowie in dem Modell auch die Masse des Anhängers 20, das heißt den Anhänger-Massewert mhmod.

Das Kraftsignal fxmod und das Kraftsignal fx werden auf ein Differenzglied 66 aufgeschaltet, das daraus eine Differenz Δfx bildet. Das Differenzglied 66 kann durch Programmcode des Auswertemoduls 70 gebildet sein. Diese Differenz Δfx wiederum wird dem Modellgenerator 65 zugeführt, welcher in Abhängigkeit von der Differenz Δfx beispielsweise den Anhänger-Massewert mhmod und vorzugsweise auch den Federparameter c und/oder den Dämpferparameter d variiert. Es ergibt sich aus Figur 5 die Struktur eines regelungstechnischen Beobachters.

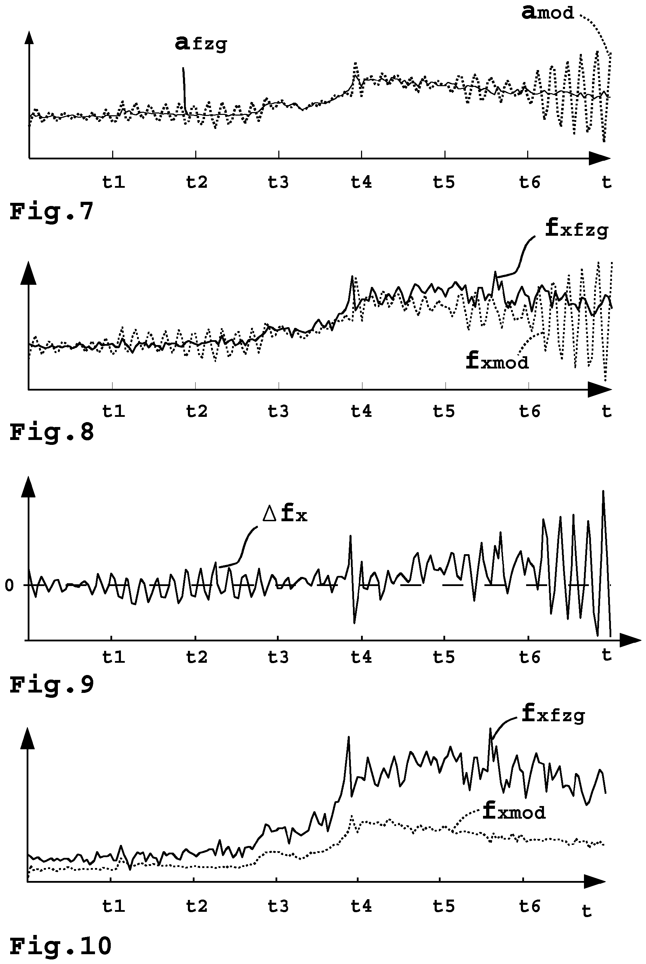

Figur 7 zeigt die Abweichung zwischen dem Zugfahrzeug-Beschleunigungswert afzg und dem Anhänger-Beschleunigungswert ahmod des Modells, wenn die Dämpfung d nicht betrachtet wird. Man erkennt insbesondere nach dem Zeitpunkt t6, dass der Anhänger 20 relativ stark bezüglich des Zugfahrzeugs 11 schwingt.

Figur 8 zeigt einen anhand der Sensoranordnung 50 ermittelten Kraftverlauf fx und einen anhand des Modells des Modellgenerator 65 erzeugten oder ermittelten Kraftverlaufs fxmod, wenn die Dämpfung d ebenfalls nicht berücksichtigt ist. Auch hier erkennt man relativ starke Schwingungen des Anhängers. Allerdings ist auffällig, dass der Schwingungsverlauf der gemessenen Kraft fx und der anhand des Modells ermittelten Kraft fxmod im gleichen Takt erfolgt, d. h. dass das Modell schon sehr gute Werte liefert.

Figur 9 zeigt den Verlauf der Differenz Δfx.

Figur 10 verdeutlicht, dass bei einem stark fehlerhaft angenommenen Anhänger-Massewert mhmod eine große Abweichung zwischen dem messtechnisch ermittelten Kraftverlauf fx und dem anhand des Modells ermittelten Kraftverlauf fxmod besteht. Beispielsweise ist die in dem Modell angenommene Masse mhmod des Anhängers 20 nur halb so groß wie die reale Masse des Anhängers 20.

Wenn nunmehr die den Modellgenerator 65 umfassenden Auswertemittel 68 anhand mindestens eines Beschleunigungsvorgangs oder mehrerer Beschleunigungsvorgänge ermittelt haben, dass der Verlauf der Differenz Δfx etwa Null ergibt, d.h. dass der im Modell angenommene Massewert mhmod des Anhängers 20 zumindest einigermaßen stimmt und die Differenz Δfx zumindest gering ist, geben sie an einer Ausgabeschnittstelle 67 beispielsweise den Anhänger-Massewert mh aus, der im Wesentlichen die reale Masse des Anhängers 20 repräsentiert.

Auch weitere Werte sind an der Ausgabeschnittstelle 67 ausgebbar, beispielsweise eine Federkonstante eist der Anhängekupplung 30. Die Federkonstante c wird nämlich beispielsweise zunächst über eine FEM-Berechnung ermittelt und als cFEM über die Eingangsschnittstelle 63 oder über eine dieser vorgelagerte Parametrierschnittstelle 69 parametriert. Die Federkonstante cFEM bildet beispielsweise einen Startwert für den Modellgenerator 65. Es ist auch möglich, dass die Anfangs-Federkonstante oder der Startwert fest im Modellgenerator 65 programmiert oder definiert ist.

Ferner kann auch der dem Modell zu Grunde liegende Dämpferparameter d einen Startwert haben, der an der Eingangsschnittstelle 63 angegeben wird oder fest bei in Auswerteeinrichtung 60, zum Beispiel deren Auswertungsprogramm oder deren Auswertemodul 70, gespeichert ist. Auch der Dämpferparameter d kann anhand einer FEM-Berechnung ermittelt sein oder eine Komponente haben, die anhand einer solchen Berechnung ermittelt ist.

Eine durch die Zugkraft Fx oder Schubkraft verursachte Verformung kann aber auch von Sensoren 58 an der Halterung 45 oder 59 am Querträger 41 erfasst werden. Die Auswerteeinrichtung 60 kann selbstverständlich auch anhand von Signalen der Sensoren 58, 59, z.B. Dehnungssensoren, das erfindungsgemäße Verfahren durchführen, vorzugsweise sogar redundant zu den Werten der Sensoren 51 und/oder 52. Die Sensoren 58, 59 sind über nicht dargestellte Leitungen oder drahtlos mit der Übertragungseinrichtung 55 verbunden.

**Patentansprüche**

1. Auswerteeinrichtung (60) für eine für ein Zugfahrzeug (11) vorgesehene Anhängekupplung (30), mit einem insbesondere einen Kupplungsarm (31) umfassenden Kuppelträger (32), an dessen freiem Ende ein Kuppelkörper (33), insbesondere eine Kupplungskugel (34), zum Anhängen eines Anhängers (20) angeordnet ist und der an einer am Zugfahrzeug (11) befestigten oder befestigbaren Halterung (45) fest oder beweglich angeordnet ist, wobei die Auswerteeinrichtung (60) eine Eingangsschnittstelle für ein Kraftsignal (fx), das von einer mindestens einen Sensor (51, 52) aufweisenden Sensoranordnung (50) zur Erfassung einer bei einem Zugbetrieb des Anhängers (20) auf das Kuppelelement wirkenden Zuglast verursachbaren Zugkraft (Fx) und/oder Schubkraft ausgegeben wird und die Zugkraft (Fx) und/oder Schubkraft repräsentiert, oder eine derartige Sensoranordnung (50) integral aufweist, wobei die Auswerteeinrichtung (60) Auswertemittel (68) zur Ermittlung eines Anhänger-Massewerts (ah) des Anhängers (20) anhand des Kraftsignals (fx) aufweist, wobei die Auswertemittel (68) zur Ermittlung des Anhänger-Massewerts (ah) anhand einer Auswertung mindestens eines Federparameters (c) ausgestaltet sind, der mindestens eine federnde Eigenschaft der Anhängekupplung (30), insbesondere des Kuppelträgers (32), repräsentiert , **dadurch gekennzeichnet, dass** der Federparameter (c) einen Bestandteil einer von der Auswerteeinrichtung (60) ausgewerteten Gleichung bildet, die den Anhänger als einen Bestandteil eines Einmassen-Schwingungssystems abbildet.

2. Auswerteeinrichtung nach Anspruch 1, **dadurch gekennzeichnet, dass** der mindestens eine Federparameter (c) eine Federkonstante der Anhängekupplung (30), insbesondere des Kuppelträgers (32) oder des Kupplungsarms (31), umfasst.

3. Auswerteeinrichtung nach Anspruch 1 oder 2, **dadurch gekennzeichnet, dass** die von der Auswerteeinrichtung (60) ausgewertete Gleichung eine Differenzialgleichung ist.

4. Auswerteeinrichtung nach einem der vorhergehenden Ansprüche, **dadurch gekennzeichnet, dass** der mindestens eine Federparameter (c) einen Bestandteil einer von der Auswerteeinrichtung (60) ausgewerteten Gleichung, insbesondere einer Differenzialgleichung, bildet, die als weitere Komponente das Produkt des Anhänger-Massewerts (ah) und eines die Beschleunigung des Anhängers (20) repräsentierenden Anhänger-Beschleunigungswerts (ah) und/oder eines die Beschleunigung des Zugfahrzeugs (11) repräsentierenden Zugfahrzeug-Beschleunigungswerts (afzg) umfasst.

5. Auswerteeinrichtung nach einem der vorhergehenden Ansprüche, **dadurch gekennzeichnet, dass** die Auswertemittel (68) zur Ermittlung des Anhänger-Massewerts (ah) anhand einer Auswertung mindestens eines Dämpferparameters (d) ausgestaltet sind, wobei der Dämpferparameter (d) zweckmäßigerweise eine Dämpfungseigenschaft der Anhängekupplung (30) im Sinne einer Schwingungsdämpfung repräsentiert.

6. Auswerteeinrichtung nach Anspruch 5, **dadurch gekennzeichnet, dass** der Dämpferparameter (d) eine durch das Material des Kuppelträgers (32) bedingte Dämpfung und/oder eine durch einen Auflaufdämpfer bedingte Dämpfung und/oder Reibungen in einem Fahrwerk bedingte Dämpfungen repräsentiert.

7. Auswerteeinrichtung nach einem der vorhergehenden Ansprüche, **dadurch gekennzeichnet, dass** die Auswerteeinrichtung (60) zu einer Ermittlung des Anhänger-Massewerts (ah) anhand eines Vergleichs zwischen einem zeitlichen Verlauf des anhand der Sensoranordnung (50) gemessenen Kraftsignals (fx) und eines anhand eines mathematischen Modells ermittelten zeitlichen Kraftverlaufs ausgestaltet ist, wobei das Modell den Anhänger (20) abbildet und einen angenommenen, die Masse des Anhängers (20) repräsentierenden Anhänger-Massewert (ah) und einen die Beschleunigung des Anhängers (20) repräsentierenden Anhänger-Beschleunigungswert (ah) und/oder einen die Beschleunigung des Zugfahrzeugs (11) repräsentierenden Zugfahrzeug-Beschleunigungswert (afzg) umfasst.

8. Auswerteeinrichtung nach Anspruch 7, **dadurch gekennzeichnet, dass** die Auswerteeinrichtung (60) in dem mathematischen Modell den angenommenen Anhänger-Massewert (ah) zur Anpassung des anhand des mathematischen Modells ermittelten Kraftverlaufs an den Verlauf des gemessenen Kraftsignals (fx) und/oder den mindestens einen Federparameter (c) und/oder einen Dämpferparameter (d) variiert.

9. Auswerteeinrichtung nach Anspruch 7 oder 8, **dadurch gekennzeichnet, dass** die Auswerteeinrichtung (60) das mathematische Modell in der Art eines regelungstechnischen Beobachters realisiert und/oder eine Differenzialgleichung aufweist.

10. Auswerteeinrichtung nach einem der vorhergehenden Ansprüche, **dadurch gekennzeichnet, dass** die Auswerteeinrichtung (60) zur Ermittlung eines die Beschleunigung des Anhängers (20) repräsentierenden Anhänger-Beschleunigungswerts (ah) anhand einer Differenzialgleichung ausgestaltet ist.

11. Auswerteeinrichtung nach einem der vorhergehenden Ansprüche, **dadurch gekennzeichnet, dass** die Sensoranordnung (50) mindestens einen Dehnungssensor aufweist, der an dem Kuppelträger (32) und/oder der den Kuppelträger (32) haltenden Halterung (45) und/oder einem an dem Zugfahrzeug (11) befestigten Träger der Anhängekupplung (30) angeordnet ist und zur Erfassung einer durch die Zugkraft (Fx) oder Schubkraft verursachten Verformung des Kuppelträgers (32) oder der Halterung (45) oder des Trägers vorgesehen ist.

12. Anhängekupplung (30) für ein Zugfahrzeug (11), mit einem insbesondere einen Kupplungsarm (31) umfassenden Kuppelträger (32), an dessen freiem Ende ein Kuppelkörper (33), insbesondere eine Kupplungskugel (34), zum Anhängen eines Anhängers (20) angeordnet ist und der an einer am Zugfahrzeug (11) befestigten oder befestigbaren Halterung (45) fest oder beweglich angeordnet ist, und mit einer mindestens einen Sensor (51, 52) aufweisenden Sensoranordnung (50) zur Erfassung einer bei einem Zugbetrieb des Anhängers (20) auf das Kuppelelement wirkenden Zuglast verursachbaren Zugkraft (Fx) und/oder Schubkraft und zur Ausgabe eines die Zugkraft (Fx) und/oder Schubkraft repräsentierenden Kraftsignals (fx), und mit einer Auswerteeinrichtung (60) nach einem der vorhergehenden Ansprüche.

13. Auswerteverfahren für eine für ein Zugfahrzeug (11) vorgesehene Anhängekupplung (30), mit einem insbesondere einen Kupplungsarm (31) umfassenden Kuppelträger (32), an dessen freiem Ende ein Kuppelkörper (33), insbesondere eine Kupplungskugel (34), zum Anhängen eines Anhängers (20) angeordnet ist und der an einer am Zugfahrzeug (11) befestigten oder befestigbaren Halterung (45) fest oder beweglich angeordnet ist, wobei das Auswerteverfahren eine Auswertung eines Kraftsignals (fx) vorsieht, das von einer mindestens einen Sensor (51, 52) aufweisenden Sensoranordnung (50) zur Erfassung einer bei einem Zugbetrieb des Anhängers (20) auf das Kuppelelement wirkenden Zuglast verursachbaren Zugkraft (Fx) und/oder Schubkraft ausgegeben wird und die Zugkraft (Fx) und/oder Schubkraft repräsentiert, und eine Ermittlung eines Anhänger-Massewerts (ah) des Anhängers (20) anhand des Kraftsignals (fx) umfasst,

wobei das Auswerteverfahren eine Ermittlung des Anhänger-Massewerts (ah) anhand einer Auswertung mindestens eines Federparameters (c) anhand von Auswertemitteln (68) umfasst, wobei der mindestens eine Federparameter (c) mindestens eine federnde Eigenschaft der Anhängekupplung (30), insbesondere des Kuppelträgers (32), repräsentiert, **dadurch gekennzeichnet, dass** der Federparamter (c) einen Bestandteil einer Gleichung bildet, die den Anhänger als einen Bestandteil eines Einmassen-Schwingungssystems abbildet, und dass das Auswerteverfahren eine Auswertung der Gleichung umfasst.

14. Auswerteverfahren nach Anspruch 13, **dadurch gekennzeichnet, dass** es bei mindestens zwei hintereinander erfolgenden Brems- oder Beschleunigungsvorgängen des Gespanns (10) bestehend aus Zugfahrzeug (11) und Anhänger (20) zur iterativen Bestimmung des Anhänger-Massewerts (ah) durchgeführt wird, wobei vorzugsweise ein Mittelwert des Anhänger-Massewerts (ah) gebildet wird.

**Claims**

1. Evaluation device (60) for a trailer coupling (30) provided for a towing vehicle (11), having a coupling carrier (32), which comprises, in particular, a coupling arm (31) and at whose free end a coupling body (33), in particular, a coupling ball (34) is arranged for connecting a trailer (20), and which coupling carrier (32) is fixedly or movably arranged on a mount (45) which is or can be attached to the towing vehicle (11), wherein the evaluation device (60) has an input interface for a force signal (fx), which is output by a sensor arrangement (50) which has at least one sensor (51, 52) and has the purpose of sensing a traction force (Fx) and/or thrust force which can be caused by a traction load acting on the coupling element during a traction operation of the trailer (20) and represents the traction force (Fx) and/or thrust force, or has a sensor arrangement of this kind integrally, wherein the evaluation device (60) has evaluation means (68) for determining a trailer mass value (ah) of the trailer (20) on the basis of the force signal (fx), wherein in that the evaluation means (68) are configured for determining the trailer mass value (ah) on the basis of an evaluation of at least one spring parameter representing at least one spring property of the trailer coupling (30), in particular of the coupling carrier (32), **characterised in that** the at least one spring parameter (c) forms a component of an equation evaluated by the evaluation device (60) which maps the trailer as a component of a single-mass sway system.

2. Evaluation device according to Claim 1, **characterised in that** the at least one spring parameter (c) comprises a spring constant of the trailer coupling (30), in particular of the coupling carrier (32) or the coupling arm (31).

3. Evaluation device according to Claim 1 or 2, in that the equation evaluated by the evaluation device (60) is a differential equation.

4. Evaluation device according to any one of the preceding claims, **characterised in that** the at least one spring parameter (c) forms a component of an equation, in particular a differential equation, evaluated by the evaluation device (60) which comprises as a further component the product of the trailer mass value (ah) and a trailer acceleration value representing the acceleration of the trailer (20) and/or a towing vehicle acceleration value (afzg) representing the acceleration of the towing vehicle (11).

5. Evaluation device according to any one of the preceding claims, **characterised in that** the evaluation means (68) are configured for determining the trailer mass value (ah) on the basis of an evaluation of at least one damper parameter (d), wherein the damper parameter (d) expediently represents a damping property of the trailer coupling (30) within the meaning of sway damping.

6. Evaluation device according to Claim 5, **characterised in that** the damper parameter (d) represents damping caused by the material of the coupling carrier (32) and/or damping caused by an overrun damper and/or damping caused by friction in a chassis.

7. Evaluation device according to any one of the preceding claims, **characterised in that** the evaluation device (60) is configured for determining the trailer mass value (ah) on the basis of a comparison between a progression over time of the force signal (fx) measured on the basis of the sensor arrangement (50) and a force progression over time determined on the basis of a mathematical model, wherein the model maps the trailer (20) and comprises an adopted trailer mass value (ah) representing the mass of the trailer (20) and a trailer acceleration value (ah) representing the acceleration of the trailer (20) and/or a towing vehicle acceleration value (afzg) representing the acceleration of the towing vehicle (11).

8. Evaluation device according to Claim 7, **characterised in that** the evaluation device (60) in the mathematical model varies the adopted trailer mass value (ah) for adjusting the force progression determined on the basis of the mathematical model to the progression of the measured force signal (fx) and/or the at least one spring parameter (c) and/or a damper parameter (d).

9. Evaluation device according to Claim 7 or 8, **characterised in that** the evaluation device (60) implements the mathematical model in the manner of a control-engineering observer and/or has a differential equation.

10. Evaluation device according to any one of the preceding claims, **characterised in that** the evaluation device (60) is configured for determining a trailer acceleration value (ah) representing the acceleration of the trailer (20) on the basis of a differential equation.

11. Evaluation device according to any one of the preceding claims, **characterised in that** the sensor arrangement (50) has at least one strain sensor which is arranged on the coupling carrier (32) and/or the mount (45) holding the coupling carrier (32) and/or a carrier of the trailer coupling (30) attached to the towing vehicle (11) and is provided for sensing a deformation of the coupling carrier (32) or mount (45) or carrier caused by the traction force (Fx) or thrust force.

12. Trailer coupling (30) for a towing vehicle (11), having a coupling carrier (32), which comprises, in particular, a coupling arm (31) and at whose free end a coupling body (33), in particular, a coupling ball (34) is arranged for connecting a trailer (20), and which coupling carrier (32) is fixedly or movably arranged on a mount (45) which is or can be attached to the towing vehicle (11), and having a sensor arrangement (50) which has at least one sensor (51, 52) and has the purpose of sensing a traction force (Fx) and/or thrust force which can be caused by a traction load acting on the coupling element during a traction operation of the trailer (20) and of outputting a force signal (fx) representing the traction force (Fx) and/or thrust force, and having an evaluation device (60) according to any one of the preceding claims.

13. Evaluation method for a trailer coupling (30) provided for a towing vehicle (11), having a coupling carrier (32), which comprises, in particular, a coupling arm (31) and at whose free end a coupling body (33), in particular, a coupling ball (34) is arranged for connecting a trailer (20), and which coupling carrier (32) is fixedly or movably arranged on a mount (45) which is or can be attached to the towing vehicle (11), wherein the evaluation method provides an evaluation of a force signal (fx) which is output by a sensor arrangement (50) having at least one sensor (51, 52) for sensing a traction force (Fx) and/or thrust force which can be caused by a traction load acting on the coupling element during a traction operation of the trailer (20) and represents the traction force (Fx) and/or thrust force, and determining a trailer mass value (ah) of the trailer (20) on the basis of the force signal (fx), wherein the evaluation method comprises determining a trailer mass value (ah) on the basis of an evaluation of at least one spring parameter (c) on the basis of evaluation means (68), wherein the at least one spring parameter (c) represents at least one spring property of the trailer coupling (30), in particular of the coupling carrier (32), **characterised in that** the at least one spring parameter (c) forms a component of an equation evaluated by the evaluation device (60) which maps the trailer as a component of a single-mass sway system, and that the evaluation method comprises an evaluation of the equation.

14. Evaluation method according to Claim 13, **characterised in that** it is carried out in the case of at least two successive braking or accelerating processes of the pair (10) comprising towing vehicle (11) and trailer (20) for iterative determination of the trailer mass value (ah), wherein a mean of the trailer mass value (ah) is preferably formed.

## Revendications

1. Dispositif d'évaluation (60) pour un attelage (30) prévu pour un véhicule tracteur (11), avec un support d'attelage (32) comprenant en particulier un bras d'attelage (31), sur l'extrémité libre duquel un corps d'attelage (33), en particulier une boule d'attelage (34) est agencée pour atteler une remorque (20) et qui est agencé de manière fixe ou mobile au niveau d'un support (45) fixé ou pouvant être fixé au véhicule tracteur (11), dans lequel le dispositif d'évaluation (60) présente une interface d'entrée pour un signal de force (fx) qui est émis par un agencement de détection (50) présentant au moins un capteur (51, 52) pour la détection d'une force de traction (Fx) et/ou force de poussée pouvant être causée par une charge de traction agissant sur l'élément d'attelage en mode de traction de la remorque (20) et représente la force de traction (Fx) et/ou force de poussée, ou présente d'un seul tenant un tel agencement de détection (50), dans lequel le dispositif d'évaluation (60) présente des moyens d'évaluation (68) pour la détermination d'une valeur de masse de remorque (ah) de la remorque (20) à l'aide du signal de force (fx), dans lequel les moyens d'évaluation (68) sont configurés pour la détermination de la valeur de masse de remorque (ah) à l'aide d'une évaluation au moins d'un paramètre de ressort (c) qui représente au moins une propriété de ressort de l'attelage (30), en particulier du support d'attelage (32), **caractérisé en ce que** le paramètre de ressort (c) forme un constituant d'une équation évaluée par le dispositif d'évaluation (60), qui illustre la remorque comme un constituant d'un système d'oscillation à une masse.

2. Dispositif d'évaluation selon la revendication 1, **caractérisé en ce que** l'au moins un paramètre de ressort (c) comporte une constante de ressort de l'attelage (30), en particulier du support d'attelage (32) ou du bras d'attelage (31).

3. Dispositif d'évaluation selon la revendication 1 ou 2, **caractérisé en ce que** l'équation évaluée par le dispositif d'évaluation (60) est une équation différentielle.

4. Dispositif d'évaluation selon l'une quelconque des revendications précédentes, **caractérisé en ce que** l'au moins un paramètre de ressort (c) forme un constituant d'une équation évaluée par le dispositif d'évaluation (60), en particulier une équation différentielle qui comporte comme autre composant le produit de la valeur de masse de remorque (ah) et une valeur d'accélération de remorque (ah) représentant l'accélération de la remorque (20) et/ou d'une valeur d'accélération de véhicule tracteur (afzg) représentant l'accélération du véhicule tracteur (11).

5. Dispositif d'évaluation selon l'une quelconque des revendications précédentes, **caractérisé en ce que** les moyens d'évaluation (68) sont configurés pour la détermination de la valeur de masse de remorque (ah) à l'aide d'une évaluation au moins d'un paramètre d'amortissement (d), dans lequel le paramètre d'amortissement (d) représente de manière appropriée une propriété d'amortissement de l'attelage (30) au sens d'un amortissement d' oscillation.

6. Dispositif d'évaluation selon la revendication 5, **caractérisé en ce que** le paramètre d'amortissement (d) représente un amortissement conditionné par le matériau du support d'attelage (32) et/ou un amortissement conditionné par un amortisseur d'entrée et/ou des amortissements conditionnés par des frictions dans un châssis.

7. Dispositif d'évaluation selon l'une quelconque des revendications précédentes, **caractérisé en ce que** le dispositif d'évaluation (60) est configuré pour une détermination de la valeur de masse de remorque (ah) à l'aide d'une comparaison entre une étendue temporelle du signal de force (fx) mesuré à l'aide de l'agencement de détection (50) et d'une étendue de force temporelle déterminée à l'aide d'un modèle mathématique, dans lequel le modèle illustre la remorque (20) et comporte une valeur de masse de remorque (ah) supposée, représentant la masse de la remorque (20) et une valeur d'accélération de remorque (ah) représentant l'accélération de la remorque (20) et/ou une valeur d'accélération de véhicule tracteur (afzg) représentant l'accélération du véhicule tracteur (11).

8. Dispositif d'évaluation selon la revendication 7, **caractérisé en ce que** le dispositif d'évaluation (60) varie dans le modèle mathématique la valeur de masse de remorque (ah) supposée pour l'adaptation de l'étendue de force déterminée à l'aide du modèle mathématique à l'étendue du signal de force mesuré (fx) et/ou l'au moins un paramètre de ressort (c) et/ou un paramètre d'amortissement (d).

9. Dispositif d'évaluation selon la revendication 7 ou 8, **caractérisé en ce que** le dispositif d'évaluation (60) réalise le modèle mathématique comme un observateur de régulation technique et/ou présente une équation différentielle.

10. Dispositif d'évaluation selon l'une quelconque des revendications précédentes, **caractérisé en ce que** le dispositif d'évaluation (60) est configuré pour la détermination d'une valeur d'accélération de remorque (ah) représentant l'accélération de la remorque (20) à l'aide d'une équation différentielle.

11. Dispositif d'évaluation selon l'une quelconque des revendications précédentes, **caractérisé en ce que** l'agencement de détection (50) présente au moins un capteur de contrainte qui est agencé au niveau du support d'attelage (32) et/ou du support (45) maintenant le support d'attelage (32) et/ou un support fixé au véhicule tracteur (11) de l'attelage (30) et est prévu pour la détection d'une déformation causée par la force de traction (Fx) ou force de poussée du support d'attelage (32) ou du support (45) ou du support.

12. Attelage (30) pour un véhicule tracteur (11) avec un support de d'attelage (32) comprenant en particulier un bras d'attelage (31), sur l'extrémité libre duquel un corps d'attelage (33), en particulier une boule d'attelage (34), est agencée pour atteler une remorque (20) et qui est agencé de manière fixe ou mobile au niveau d'un support (45) fixé ou pouvant être fixé au véhicule tracteur (11), et avec un agencement de détection (50) présentant au moins un capteur (51, 52) pour la détection d'une force de traction (Fx) et/ou force de poussée pouvant être causée par une charge de traction agissant sur l'élément d'attelage en mode de traction de la remorque (20) et pour l'émission d'un signal de force (fx) représentant la force de traction (Fx) et/ou force de poussée, et avec un dispositif d'évaluation (60) selon l'une quelconque des revendications précédentes.

13. Procédé d'évaluation pour un attelage (30) prévu pour un véhicule tracteur (11), avec un support d'attelage (32) comprenant en particulier un bras d'attelage (31), sur l'extrémité libre duquel un corps d'attelage (33), en particulier une boule d'attelage (34) est agencée pour atteler une remorque (20) et qui est agencé de manière fixe ou mobile au niveau d'un support (45) fixé ou pouvant être fixé au véhicule tracteur (11), dans lequel le procédé d'évaluation prévoit une évaluation d'un signal de force (fx) qui est émis par un agencement de détection (50) présentant au moins un capteur (51, 52) pour la détection d'une force de traction (Fx) et/ou force de poussée pouvant être causée par une charge de traction agissant sur l'élément d'attelage en mode de traction de la remorque (20) et représente la force de traction (Fx) et/ou force de poussée, et comporte une détermination d'une valeur de masse de remorque (ah) de la remorque (20) à l'aide du signal de force (fx), dans lequel le procédé d'évaluation comporte une détermination de la valeur de masse de remorque (ah) à l'aide d'une évaluation d'au moins un paramètre de ressort (c) à l'aide de moyens d'évaluation (68), dans lequel l'au moins un paramètre de ressort (c) représente au moins une propriété de ressort de l'attelage (30), en particulier du support d'attelage (32), **caractérisé en ce que** le paramètre de ressort (c) forme un constituant d'une équation qui illustre la remorque comme un constituant d'un système d'oscillation à une masse, et que le procédé d'évaluation comporte une évaluation de l'équation.

**14.** Procédé d'évaluation selon la revendication 13, **caractérisé en ce qu'**il est réalisé pour au moins deux processus d'accélération ou de freinage s'effectuant l'un après l'autre de l'attelage (10) se composant du véhicule tracteur (11) et de la remorque (20) pour la détermination itérative de la valeur de masse de remorque (ah), dans lequel une valeur moyenne de la valeur de masse de remorque (ah) est de préférence formée.

Fig.1

Fig.2

Fig.3

**Fig.4**

$f_x$

$a_{fzg}$

$f_{xmod}$

$c_{FEM}$

$\Delta f_x$

$C_{ist}$   $M_h$

**Fig.5**

**Fig.6**

**a**mod

**a**fzg

t1     t2     t3     t4     t5     t6     t

**Fig.7**

**f**xfzg

**f**xmod

t1     t2     t3     t4     t5     t6     t

**Fig.8**

△**f**x

0

t1     t2     t3     t4     t5     t6     t

**Fig.9**

**f**xfzg

**f**xmod

t1     t2     t3     t4     t5     t6     t

**Fig.10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011117519 A1
- DE 102012021352 A1